Europäisches Patentamt

(19) European Patent Office

Office européen des brevets

(11) Publication number: **0 167 274**
A2

(12) **EUROPEAN PATENT APPLICATION**

(21) Application number: 85303825.5

(22) Date of filing: 30.05.85

(51) Int. Cl.⁴: **F 04 B 21/02**
**F 16 K 15/14, F 04 B 21/04**
**F 04 B 17/04**

(30) Priority: 31.05.84 GB 8413826

(43) Date of publication of application:
08.01.86 Bulletin 86/2

(84) Designated Contracting States:
CH DE FR GB IT LI

(71) Applicant: Cartwright, Gary Ernest
28 Hathaway Gardens
Waterlooville Hampshire(GB)

(71) Applicant: Palmer, Paul
8 St. Matthews Road
Cosham Hampshire(GB)

(72) Inventor: Cartwright, Gary Ernest
28 Hathaway Gardens
Waterlooville Hampshire(GB)

(72) Inventor: Palmer, Paul
8 St. Matthews Road
Cosham Hampshire(GB)

(74) Representative: Mair, Richard Douglas et al,
F.J. Cleveland & Company 40-43 Chancery Lane
London WC2A 1JQ(GB)

㊸ Pumps and valves therefor.

㊹ An oscillatory pump comprising a cylinder (9) having
normally-closed valves (10,13) of flexible material fixedly
located at the inlet ($A_c$) and outlet ($B_c$) ends of the cylinder
(9), a piston (1) having an inlet ($A_p$) and an outlet ($B_p$), said
piston (1) being reciprocatable within the cylinder (9) and
provided with a further valve (6) of flexible material movable
with the piston (1) and located at the outlet end ($B_p$) of the
piston (1), the piston (1) being constructed such as to allow
fluid to pass from an inlet chamber (C1) formed between the
inlet valve (10) and the inlet end ($A_p$) of the piston (1) to an
outlet chamber (C2) formed between the further valve (6) and
the outlet valve (13) in response to movement of the piston
(1) within the cylinder (9) and means (1.2.3) for effecting
reciprocatory movement of the piston (1) within the cylinder
(9).

EP 0 167 274 A2

./...

FIG.1

"PUMPS AND VALVES THEREFOR"

DESCRIPTION

This invention relates to fluid pumps of the oscillatory type and in particular but not exclusively relates to an electromagnetically operated oscillatory pump, although the pump of the present invention may be operated by other means. The invention also relates to one-way valves suitable for such pumps but also suitable for other uses.

According to the invention there is provided a one-way valve comprising a housing defining a passageway therethrough, a valve seat located generally centrally of the passageway, and a generally annular flexible valve member secured at its periphery to the housing and extending inwardly to the valve seat, the member being arranged so that excess pressure across the valve member in one direction along the passageway causes the flexible member to extend away from the valve seat thereby permitting fluid flow in the said one direction, whereas excess pressure in the other direction urges the flexible member to seal against the valve seat thereby preventing fluid flow in the said other direction.

Optional features are defined in the dependent claims.

Embodiments of the invention will now be described by way of example only, with reference to the accompanying drawings, wherein:

Figure 1 is a sectional view of an oscillatory pump according to the present invention and having three valves of the invention;

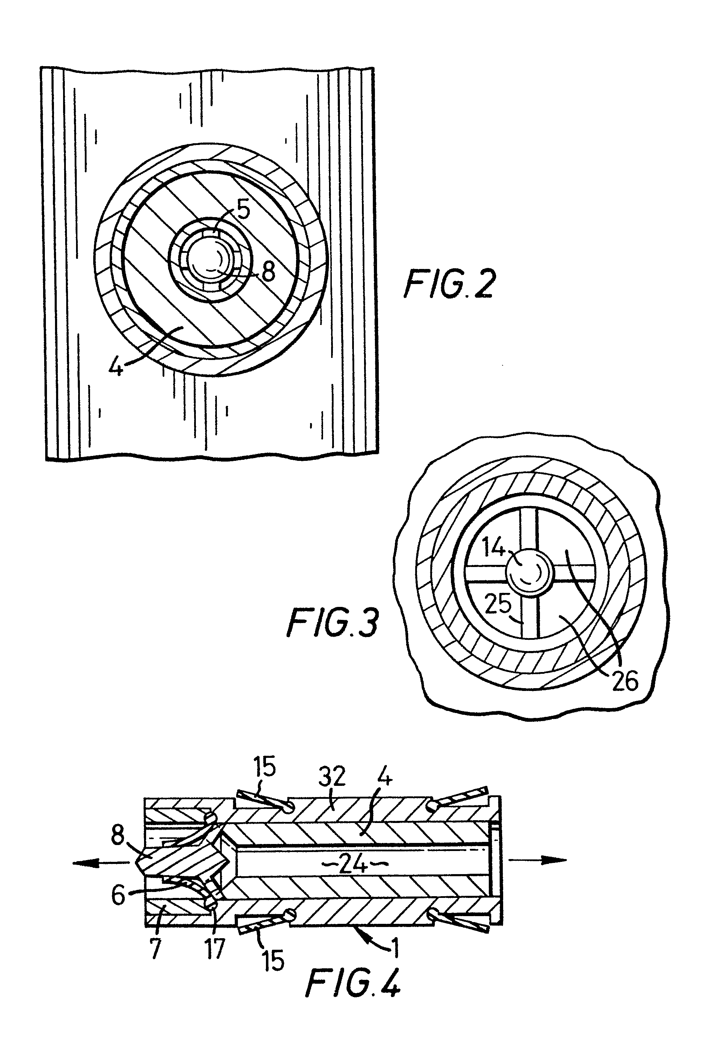

Figure 2 is a sectional view taken on the lines A-A of Figure 1;

Figure 3 is a sectional view taken on the lines B-B of Figure 1;

Figure 4 is a sectional view of a modified piston; and

Figure 5 is a sectional elevation, corresponding to Figure 1, of a modified version of the pump.

The pumps shown in the drawings are electromagnetically operable but as previously indicated, any means may be employed to effect reciprocation of the piston within the cylinder and the electromagnetically operable pump is described by way of example only merely to illustrate in a convenient way the principle of operation of the pump.

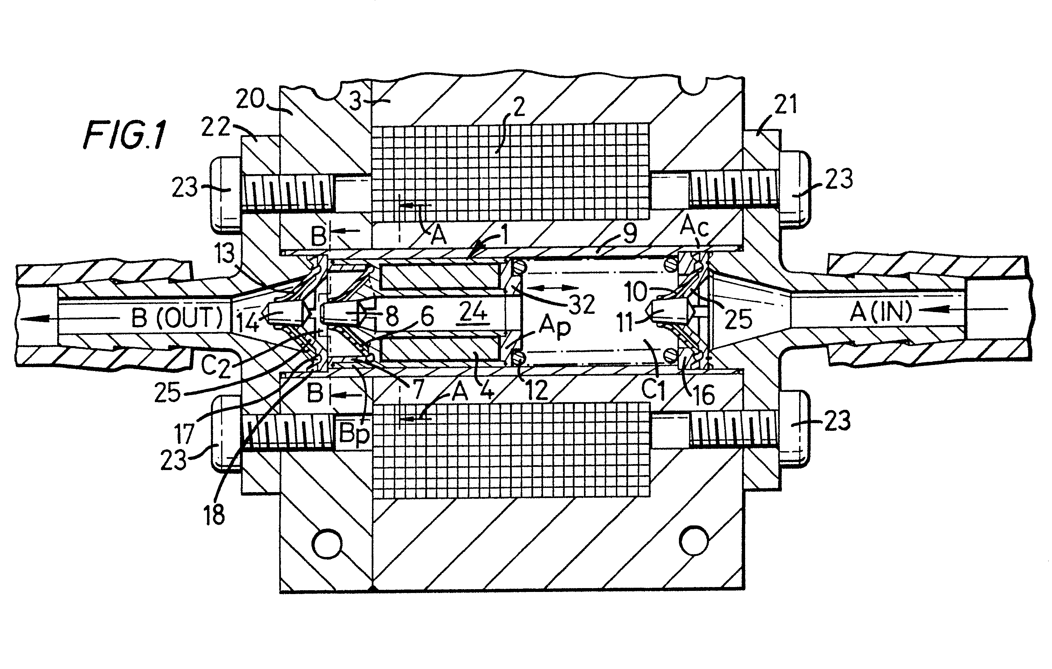

Thus, as shown in Figure 1, the piston 1 forms an armature located in the magnetic field of an electromagnetic transducer, the coil of which is shown at 2 and the laminations of the stator at 3. The coil 2 is mounted in a cavity in the stator 3, the cavity being closed by a laminated stator end cover 20 which is securable to the stator 3. Inlet and outlet housing members 21, 22 are attached to the stator 3 and end cover 20 respectively by screws 23.

The piston 1 comprises a slug 4 of ferro-magnetic or ferri-magnetic material enclosed by a plastic housing 32 which defines a through passageway 24. The housing is formed with transfer ports 5 to allow fluid to pass from the inlet end A (IN) of the pump to the outlet end B (OUT) thereof. The outlet end $B_p$ of the piston 1 is formed with a valve movable with the piston 1, having a flexible valve member 6 of an elastic, flexible material normally in contact with a tapered pintle 8, forming a valve seat, such as normally to close the valve.

The piston 1 is arranged to reciprocate within cylinder 9 located within the stator assembly 3, 20 of the transducer and the inlet end $A_c$ of the cylinder 9 is provided with a stationary valve the flexible portion 10 of which is normally in contact with the tapered pintle 11. A compression spring 12 is located between the inlet end $A_c$ of the cylinder 9 and inlet end $A_p$ of the piston 1.

At the outlet end $B_c$ of the cylinder 9, a stationary flexible valve is provided with the flexible portion 13 normally in contact with a tapered pintle 14. For the purposes of illustrating the operation of the pump, the chamber formed between the inlet end $A_c$ of the cylinder and the inlet end $A_p$ of the piston 1 will be referred to as "chamber C1" whilst the chamber formed between the outlet end $B_p$ of the piston, i.e. beyond the valve 6, and the valve or seal 13 will be referred to as "chamber C2".

The pump operates as follows:-

When the coil of the electromagnetic transducer is energised, the slug 4 will traverse the magnetic field thereof and is arranged to move initially to the right in Figure 1. Fluid initially enters chamber Cl through valve 10 but as the piston 1 moves to the right, compressing the compression spring 12 and reducing the volume of chamber Cl, the pressure exerted on the fluid in chamber Cl causes the flexible portion 10 of the inlet valve to close around the fixed pintle 11 to prevent fluid entering chamber Cl from the inlet end of the pump. The pressurized fluid in chamber Cl is directed through the channels 5 of the piston 1 and forces the flexible portion 6 of the valve in the piston away from the valve seat 8, to open the valve and allow the fluid to pass into chamber C2. At this stage of the pump cycle, the coil 2 is de-energised and the spring is permitted to expand to move the piston 1 to the left in Figure 1. This has the effect of reducing the volume of chamber C2 and increasing the pressure of the fluid therein, causing the flexible portion 6 to close onto the valve seat 8. The pressure exerted by the piston 1 on the fluid in chamber C2 causes the flexible portion 13 of the outlet valve to move away from the valve seat 14 to allow the fluid in chamber C2 to pass to the pump outlet $B_c$.

The piston 1 moving to the left also increases the volume of chamber Cl and a partial vacuum is formed which allows the flexible portion of inlet valve 10 to be moved away from the valve seat by fluid from the inlet end A of the pump, thereby allowing fluid to enter chamber 1. The cycle is then repeated by again energizing the coil 2 of the transducer.

The three valves are all basically similar and will now be described in further detail, referring specifically to the cylinder outlet valve. Pintle 14 forms part of a valve seat member 25, having four holes 26 formed therethrough for fluid flow. The valve seat member of the valve in the piston is integral with the piston, the channels 5 forming the through holes, but the valve seat members of the cylinder inlet and outlet valves are located within the cylinder 9.

The flexible valve members 13, 10 and 6 are annular and are clamped at their peripheral enlargements 17 between their corresponding valve seat members and outlet housing member 22, annular member 16 and piston insert 7 respectively. Valve members 13 and 10 (not 6) also have a peripheral extension bead 18 which seals against the cylinder 9, preventing fluid leakage between the housing members 22, 21 and the cylinder 9. Valve seat member 25 of the outlet valve and annular member 16 seat against internal shoulders in the cylinder 9.

The annular valve member 13 is of resilient, elastic material such as rubber or synthetic rubber, and extends inwardly and in a downstream direction, generally at $45^{o}$, to seal against the pintle 14. The surface of the pintle engaged by the valve member is generally longitudinal of the pump, and in the example shown is conical. The relative dimensions of the pintle and the central hole in the valve member are preferably such that the valve member grips the pintle under equilibrium conditions. As will have been understood, excess pressure in a downstream direction causes the valve to open, the flexible member dilating, extending elastically and creating an annular gap between the pintle and the inner periphery of the flexible member, while excess pressure in the reverse direction causes the valve member to seal against the pintle.

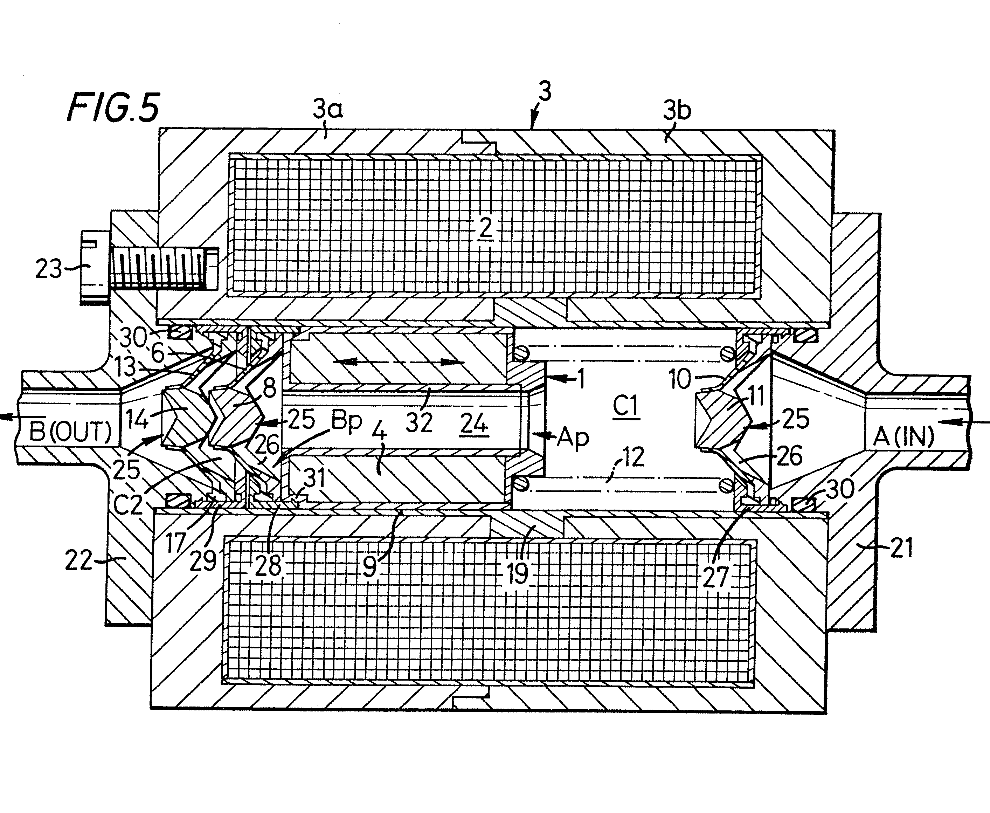

Where the pump is used for pumping at high pressure and/or for pumping gas such as air, the piston may be provided with resilient annular skirt seals 15 as shown in the piston of Figure 4, to prevent leakage between the piston and cylinder. For liquids and/or low pressure pumping, such seals will normally be unnecessary as leakage through the small annular clearance between piston and cylinder will be negligible.

The pump when operated electromagnetically will operate off any alternating current supply and at most standard voltage levels. The pump is of a lightweight construction and can be produced entirely from non-toxic materials allowing the pump to be used with safety for pumping fluids such as beverages, alcoholic and non-alcoholic drinks etc. The pump may be dimensioned such that for each cycle, a predetermined volume of fluid is dispensed from the outlet end B of the pump.

Figure 5 shows a modified pump but which is similar in most respects to the pump of Figure 1, similar elements being shown by the same reference numeral as in Figure 1. The stator 3 is in two portions 3a, 3b which together house the coil 2 and hold between them a radial extension 19 of the cylinder 9. Cylinder 9 with radial extension 19 are of a low magnetic permeability material such as plastic. The three valve members 6, 10, 13 are identical and have rectangularly shaped peripheral enlargements 17 held between identical valve seat members 25 and annular members 28, 27 and 22 respectively. Neither the cylinder inlet valve nor the cylinder outlet valve have radial extensions corresponding to 18 in Figure 1, the necessary seals between the housing members 21, 22 and the cylinder 9 being provided by 0-rings 30. As will be seen from Figure 5, identical annular members 27, 28 and 29 have a small inner peripheral barb 31 for snap fitting engagement in a corresponding circular groove in the housing member 21, piston 1 and housing member 22 respectively.

The arrangement of three valves, as described in the embodiments, has the advantage of very efficient pumping, whatever the viscosity or density of the fluid being pumped. High flow rate at high pressure can be attained. However, it has been found surprisingly that the pump will work well with only one valve, the valve in the piston. This arrangement can be used to achieve high flow rate at low pressure, utilizing the inertia of the fluid to open the valve member 6. The pump will also operate with two valves, one valve in the piston and the other either at the inlet or the outlet of the cylinder. This is useful for achieving a high flow rate at low pressure in pumping gases.

In the illustrated embodiments, the piston is formed by a two-part housing which encloses the slug 4. However, the piston may be moulded integrally around the slug 4 in manufacture. For pumping beverages, preferred materials are acetal resin for the piston housing, mild steel for the slug 4 and PTFE for the cylinder. For pumping liquids such as fuel which do not require the plastic housing protection for the mild steel slug, the housing and slug may be formed as a single integral member of mild steel, with the cylinder for example being of stainless steel.

The described one way valves are very effective and durable, having a long life (from the fatigue point of view) because the flexible members extend a relatively small amount in opening because of their annular configuration. The periphery and central hole in the flexible members may have any shape but are most conveniently round as in the embodiments. A further advantage is that the seal between the flexible member and rigid pintle is much more effective and long lasting than a seal between

- 11 -

two flexible members as seen in some prior art valves. The downstream-swept configuration of valve member together with the support provided by the portions of the valve seat members 25 between the holes 26 means that the valve members can withstand very high reverse pressures without unseating, that is being forced upstream out of sealing engagement with the pintle. There may be any number and shape of holes 26 through the valve seat members 25. Typically, there will be a larger number of holes (and smaller relative sizes) with larger sizes of valve.

## CLAIMS

1.      A one-way valve comprising a housing defining a passageway therethrough, a valve seat located generally centrally of the passageway, and a generally annular flexible valve member secured at its periphery to the housing and extending inwardly to the valve seat, the member being arranged so that excess pressure across the valve member in one direction along the passageway causes the flexible member to extend away from the valve seat thereby permitting fluid flow in the said one direction, whereas excess pressure in the other direction urges the flexible member to seal against the valve seat thereby preventing fluid flow in the said other direction.

2.      A valve as claimed in claim 1 wherein the valve member extends inwardly and in the said one direction to the valve seat.

3.      A valve as claimed in claim 2 wherein the surface of the valve seat engaged by the valve member is oriented generally longitudinally of the passageway.

4.      A valve as claimed in claim 3 wherein the said surface is conical.

5.      A valve as claimed in any preceding claim wherein the valve seat is provided by a valve seat member mounted to the housing and extending across the passageway, the valve seat member having at least one hole formed therethrough for fluid flow.

6.      A valve as claimed in claim 5 wherein the valve member is clamped around its periphery between a generally annular housing member and the valve seat member.

7.      An oscillatory pump comprising a cylinder having inlet and outlet ends, a piston having a passageway therethrough and reciprocatable within the cylinder, the piston having a valve as claimed in any preceding claim arranged to open and close the passageway in the piston, and means for effecting reciprocatory movement of the piston whereby to pump fluid from the cylinder inlet to the cylinder outlet.

8.     An oscillatory pump as claimed in claim 7 wherein the cylinder has normally-closed valves of flexible material fixedly located at the inlet and outlet ends of the cylinder, the passageway in the piston having an inlet and an outlet, so that the piston allows fluid to pass from an inlet chamber formed between the inlet valve and the inlet end of the piston to an outlet chamber formed between the valve of the piston and the outlet valve in response to movement of the piston within the cylinder.

9.     An oscillatory pump as claimed in either of claims 7 or 8, wherein the means for effecting reciprocatory movement of the piston within the cylinder comprises energisable means arranged when energised to move the piston in one direction within the cylinder, and return means arranged to return the piston in the opposite direction when the energisable means is de-energised.

10.     An oscillatory pump as claimed in any one of claims 7 to 9, wherein at least one resilient skirt is provided on the piston to extend therearound to provide a seal between the piston and cylinder.

*FIG.1*

0167274

FIG.2

FIG.3

FIG.4

FIG.5

3a  3  3b

2

23

30
6
13
14
B(OUT)
25
C2
22
17
29
28
9
19
27

8
25 Bp 4 32 24
26
31

1
Ap
C1
12

10
11 25
26
A(IN)
30
21

3/3

0167274